# EUROPEAN PATENT APPLICATION

(11) **EP 3 364 355 A1**
(43) Date of publication of application: **22.08.2018**
(21) Application number: 16855735.3
(22) Date of filing: 13.10.2016
(51) Int. Cl.: G06Q 20/12, G06Q 20/40, G06Q 20/32, G06Q 20/04, G06Q 20/34

(54) **APP CARD-LINKED REPRESENTATIVE CARD, AND PAYMENT SYSTEM AND PAYMENT METHOD THEREFOR**

(30) Priority: 13.10.2015 KR 20150143073
(71) Applicant: KB Kookmincard Co., Ltd., Seoul 03173 (KR)
(72) Inventor: KIM, Se Hun, Seoul 07651 (KR); KIM, Jee Eun, Goyang-si Gyeonggi-do 10597 (KR); SHIN, Jae Choon, Incheon 12981 (KR); BAE, Seo Hyeon, Seoul 02087 (KR); CHAE, Heung Sik, Seoul 06089 (KR); JUNG, Ji Hyun, Goyang-si Gyeonggi-do 10239 (KR); JO, Kyung Mu, Seoul 05525 (KR)
(74) Representative: Locas, Davide
(86) International application number: PCT/KR2016/011484
(87) International publication number: WO 2017/065518

(57) **Abstract**

The present invention relates to a representative card linked with app cards, a payment system and a method thereof. The payment system comprises: a customer terminal which is connected to a card company server system through an app or web and is capable of replacing a main payment card with one selected among at least one or more app cards registered in the app or web in real time; a standard representative card which can be used online or offline as the representative of the app cards; an authorization network in which an authorization or purchase request is made based on the representative card; and a card company server system which performs an authorization or purchase process based on the main payment card of the registered app cards linked with the representative card.

## Description

### Field of the Invention

The present invention relates to a representative card linked with app cards, a payment system and a method thereof, and particularly to an app card linked representative card, a payment system and a method thereof, by which a main payment card of app cards registered through an app or web can be changed in real time, and when a single app card linked representative card is issued and presented for payment, the main payment card designated in advance can be used for an authorization process, service offer and application of card usage achievement.

### Background of the Invention

Typical mobile cards include a Universal Requester Identity Module (USIM) type mobile card and an application type (App) mobile card. The USIM type mobile card is a type of card, which is issued in a USIM and stores information to be used. When a smart phone having the issued USIM type mobile card record therein approaches a payment terminal provided in an affiliated shop, payment is performed. However, since a card issuing procedure is complex and a separate payment terminal is required, only a limited number of affiliated shops can utilize the USIM type mobile card payment system. In addition, the existing real card payment system using a real magnetic or IC card cannot be changed by the payment system using a mobile phone based on Near Field Communication (NFC) technology due to a problem of unfamiliarity with the mobile payment system.

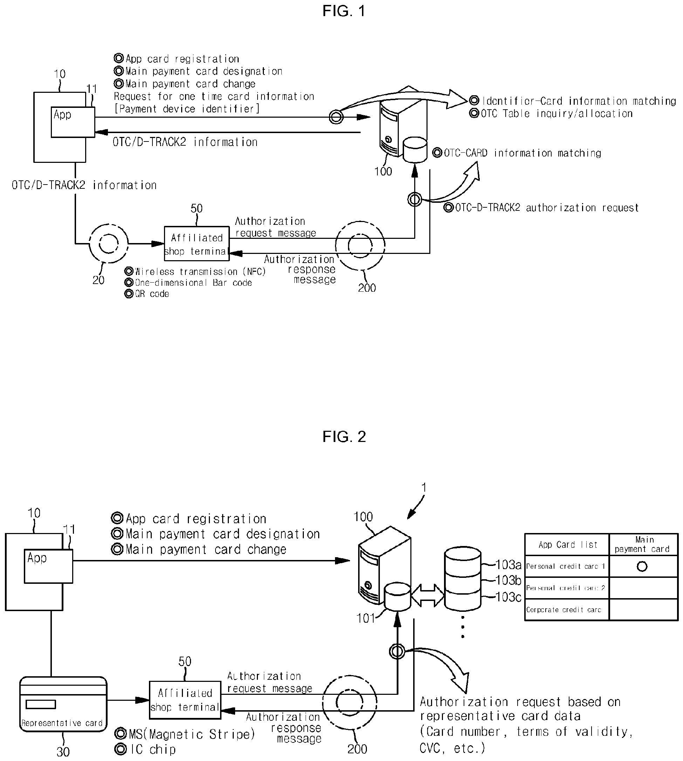

As shown in FIG. 1, the characteristic of the app type mobile card lies in that it can be simply registered through an app to then be used without undergoing a complex card issuing procedure in which a customer terminal 10 executes an app 11 to notify a card company server system 100 of a before-transaction payment message to then request for one time card information, and transmits the received one time card information to an affiliated shop terminal 50 in the form of NFC, bar code or QR code, and the affiliated shop terminal 50 transmits an authorization request message including one time card information to the card company server system 100 via an authorization network 200.

However, since the app card also requires a separate payment terminal, like the USIM mobile card, only a limited number of affiliated shops can utilize the USIM type mobile card payment system. In addition, the USIM type mobile card payment system is just restrictively being utilized due to several problems, including unfamiliarity with the bar code or NFC payment system, inconvenient use of inputting a payment secret number by executing a payment application whenever payment is to be performed, payment failures under the app-inexecutable environment caused by exhausted battery capacity of smart phone.

### Objects of the Invention

To solve the problems of the prior art, an object of the present invention is to provide a representative card linked with app cards, a payment system and a method thereof, which can be used at every affiliated shop of normal credit cards, can be operated without causing any trouble to existing card customers in using the card payment and can eliminate inconvenience of possessing multiple payment cards, as intended by a mobile card (USIM or App card) payment system.

The above and other aspects of the present invention will be described in or be apparent from the following description of exemplary embodiments.

### Summary of the Invention

According to an aspect of the present invention, there is provided a payment system of a representative card linked with app cards, the payment system including a customer terminal which is connected to a card company server system through an app or web and is capable of replacing a main payment card with one selected among at least one or more app cards registered in the app or web in real time, a standard representative card which can be used online or offline as the representative of the app cards, an authorization network in which an authorization or purchase request is made based on the representative card, and a card company server system which performs an authorization or purchase process based on the main payment card of the registered app cards linked with the representative card.

In the app card linked representative card payment system and method according to an embodiment of the present invention, a customer can conveniently use a variety of goods or services in variable manners according to conditions in real time by carrying only a single representative card, instead of by possessing multiple payment cards. In addition, the customer can register only the single representative card to be used for online payment without a need for registering multiple payment cards one by one with various payment platforms whenever payment is to be performed. Further, secured card payment can be implemented based on the representative card irrespective of power supply of mobile phone.

In addition, the app card linked representative card payment system and method according to an embodiment of the present invention can be conveniently used from the viewpoints of affiliated shops and VAN companies since the existing card payment system is used as it is. That is to say, it is not necessary to train employees for new service system and to make the employees feel uncomfortable in using the new service system. In addition, unlike existing mobile card (USIM, App card) payment systems in which a separate payment terminal should be installed and developed and which can be used only at particular affiliated shops, the app card linked representative card payment system and method according to an embodiment of the present invention can be used at any affiliated shop of normal card payment system.

In the app card linked representative card payment system and method according to an embodiment of the present invention, since the card company provides a variety of goods or services using a single real payment card, it is possible to minimize issuing events of real payment cards, thereby saving costs associated with issuing new cards, including raw materials, packing and delivery of blank cards, and achieving issuing process efficiency.

### Brief Description of the Drawings

FIG. 1 is a communication diagram showing a payment process of a conventional app type card payment system;
FIG. 2 is an overall schematic diagram showing an app card linked representative card payment system according to an embodiment of the present invention;
FIG. 3 is a detailed schematic diagram showing a card company server system of the app card linked representative card payment system according to an embodiment of the present invention;
FIG. 4A is a detailed schematic diagram showing an app card ledger DB of the app card linked representative card payment system according to an embodiment of the present invention;
FIG. 4B is a detailed schematic diagram showing a representative card authorization information matching DB of the app card linked representative card payment system according to an embodiment of the present invention;
FIG. 5 is a communication diagram showing a method of switching a main payment card to one among app cards linked with the representative card according to an embodiment of the present invention;
FIG. 6A is a communication diagram showing an authorization process of the app card linked representative card according to an embodiment of the present invention;
FIG. 6B is a flowchart showing the authorization process of the app card linked representative card according to an embodiment of the present invention;
FIG. 7 is a flowchart showing a method of issuing an app card linked representative card according to an embodiment of the present invention; and
FIG. 8 is a conceptual diagram showing effects expected by using an app card linked representative card according to an embodiment of the present invention registered with various payment platforms.

### Description of Preferred Embodiments

Hereinafter, an app card linked representative card payment system and method according to an embodiment of the present invention will be described in detail with reference to the accompanying drawings.

Although the present invention is described through an exemplary embodiment illustrated in the accompanying drawings, it is noted that the exemplary embodiment is are only for easily understanding the spirit of the present invention and it should not be interpreted that the spirit of the present invention is limited by the illustrated exemplary embodiment.

The term "credit card" described in the present specification may denote a credit card, a check card, a gift card, etc., but not limited in its meaning according to the card type or medium. Accordingly, users can take advantage of a wide variety of card services and benefits given by card usage achievement using a single representative card. That is to say, the representative card described in the following description may mean a real payment card that can be actually carried by the user.

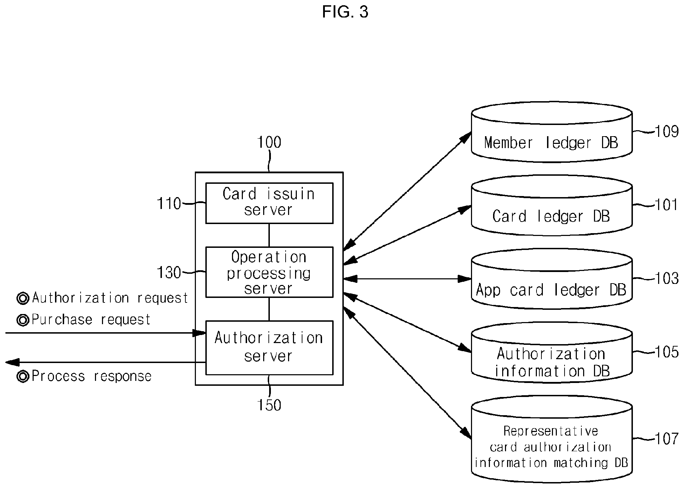

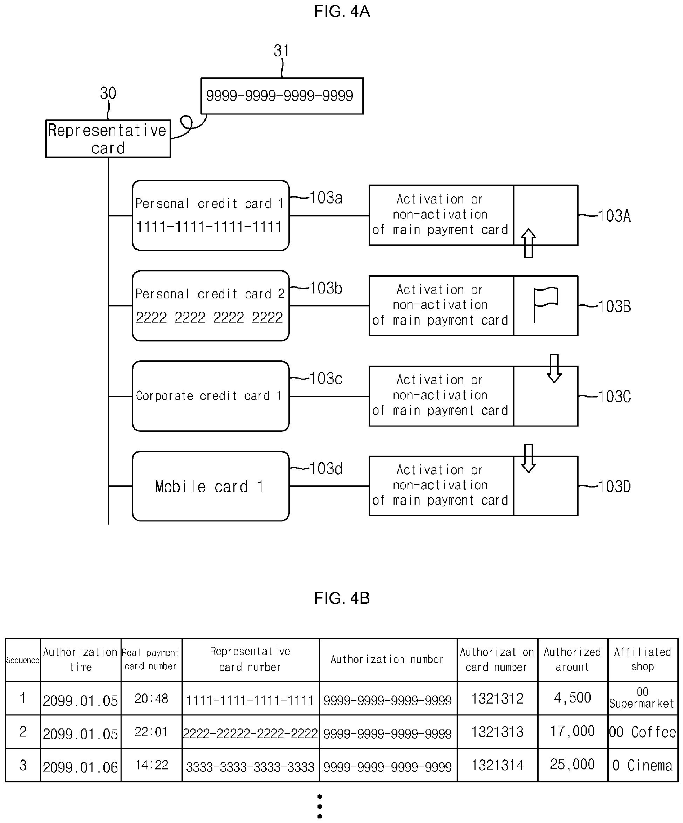

FIG. 2 is an overall schematic diagram showing an app card linked representative card payment system according to an embodiment of the present invention, FIG. 3 is a detailed schematic diagram showing a card company server system of the app card linked representative card payment system according to an embodiment of the present invention, FIG. 4A is a detailed schematic diagram showing an app card ledger DB of the app card linked representative card payment system according to an embodiment of the present invention, and FIG. 4B is a detailed schematic diagram showing a representative card authorization information matching DB of the app card linked representative card payment system according to an embodiment of the present invention.

Referring to FIG. 2, the app card linked representative card payment system 1 according to an embodiment of the present invention may include a customer terminal 10 which can register a credit card as an app card through an app (or web) 11 and can change a main payment card, a representative card 30 linked with the app cards registered from the customer terminal 10, an affiliated shop terminal 50 which reads card information and generates an authorization request message with affiliated membership information and payment cost information added to the card information read from a magnetic stripe (MS) or integrated circuit (IC) chip of the representative card 30 when a payment request is transmitted from the representative card 30, a card company server system 100 which receives the authorization request message generated by the affiliated shop terminal 50 and determines whether to perform an authorization for the authorization request, and an authorization network 200 which connects the affiliated shop terminal 50 with the card company server system 100.

The customer terminal 10 may be a device that can process payment in a mobile environment, including a portable device such as a mobile phone, a smart phone, a notebook computer, or a personal digital assistant (PDA), and a computer capable of performing wired/wireless communications.

The customer terminal 10 may not be used in payment unless it is necessary to register, designate or change the main payment card. Accordingly, even when the customer terminal 10 is not available or there is no battery to drive the customer terminal 10, payment can be performed based on the representative card 30.

In addition, since it is not necessary to execute the app (or web) 11 of the customer terminal 10 to perform payment, a complex procedure for performing payment is not required. Moreover, there is no risk of secret number leakage and the waiting time for payment may not be required.

The customer terminal 10 may register at least one or more credit cards as app cards in the card company server system 100 through its app (or web) 11, may designate one of the app cards can be determined as a main payment card and may make a request for switching the main payment card to the designated app card in real time.

If only the affiliated shop terminal 50 is of the type in which card information can be read from a magnetic stripe (MS) or IC chip, customer information can be read from the representative card 30 of the app card linked representative card payment system 1 according to an embodiment of the present invention, a separate payment infrastructure may not be required. Therefore, the affiliated shop terminal 50 may not necessarily gain a particular app card affiliated membership to perform payment based on the main payment card of the app cards registered from the customer terminal 10.

The card company server system 100 includes a card issuing server 110, an operation processing server 130, and an authorization server 150. The card issuing server 110 issues all credit cards. When the authorization request message or the purchase request message for the credit card issued by the card issuing server 110 is received from affiliated shop terminal 50 via the authorization network 200, the operation processing server 130 determines whether the authorization request is valid or not and performs an authorization process by referring to a card ledger DB 101, an app card ledger DB 103, an authorization information DB 105, a representative card authorization information matching DB 107, and a member ledger DB 109, which will later be described in detail. The authorization server 150 responds to the authorization request for the affiliated shop terminal 50 with an operation result of the authorization or purchase process performed by the operation processing server 130.

When the card issuing server 110 issues a credit card, the card company server system 100 may store card member related information, including membership number, resident registration number, mobile phone number, etc., in the member ledger DB 109.

In addition, the card member related information issued by the card issuing server 110, including, for example, card number, bank identification number (BIN), terms of validity, card verification code (CVC), product code, or applicable services, may be stored in the card ledger DB 101.

In addition, the card information of the app card for the issued credit card, registered through the customer terminal 10, including, for example, registered app card number, or main payment card information, may be stored in the app card ledger DB 103.

In addition, authorization related information, including, for example, authorization number, authorization time, affiliated shop, payment amount, or purchase data, may be stored in the authorization information DB 105.

Further, representative card information requested for authorization, real payment card information about a real payment card as the main payment card at the time of authorization, etc. may be stored in the representative card authorization information matching DB 107. Here, the real payment card means a card used at the time of authorization and the main payment card may have the same concept with the real payment card at the time of authorization. However, when the user has changed the main payment card after being authorized, the main payment card may be different from the real payment card.

In the app card linked representative card payment system 1 according to an embodiment of the present invention, the card company server system 100 may further include the representative card authorization information matching DB 107 and may match and store the authorization related information of the representative card 30, that is, the representative card information, the information about the main payment card actually presented for payment, and authorization information.

Therefore, when a payment request is made from the affiliated shop terminal 50 using the representative card 30, the operation processing server 130 identifies the representative card 30 by referring to the card ledger DB 101, and confirms which app card has been determined as the main payment card linked with the representative card 30 by referring to the app card ledger DB 103. The authorization server 150 may perform authorization based on the main payment card confirmed by the operation processing server 130 to then construct the authorization information DB 105 and may offer services or benefits earned by card usage achievement to credit card members based on the main payment card.

In addition, the authorization server 150 allows the operation processing server 130 to construct the representative card authorization information matching DB 107 and responds to the payment request for the affiliated shop terminal 50 with the representative card number to be utilized in finding the main payment card on which payment is actually performed by referring to the representative card authorization information matching DB 107 when an event (transaction cancellation, purchase request, etc.) is generated from the affiliated shop terminal 50 through the representative card 30.

The authorization network 200 described in the present specification may denote a network, such as a value-added network (VAN) server relaying authorization information between the affiliated shop terminal 50 and the card company server system 100.

When the affiliated shop terminal 50 transmits payment data to the card company server system 100, the authorization network 200 may be a VAN server that collects and manages sale slips as a proxy of various card companies, grasps card company information from the payment data transmitted from the affiliated shop terminal 50 and provides the payment data to the card company server.

In the app card linked representative card payment system 1 according to an embodiment of the present invention, payment based on the representative card 30 can be performed in the same manner with the normal credit card payment without a need for executing the app (or web) 11 of the customer terminal 10.

That is to say, in the app card linked representative card payment system 1 according to an embodiment of the present invention, the authorization process in the section ranging from the affiliated shop terminal 50 to the authorization network 200 is performed based on a fixed number of the representative card 30, the card company processes the offer of goods or services and application of card usage achievement based on the main payment card designated by the customer in advance through the app (or web) 11 at the time of authorization. In addition, since the authorization, purchase, charging processes are performed on the real card number, a method for matching the real card number to the representative card number is required.

To this end, as shown in FIG. 4A, characteristic data 31 of the representative card 30, which specifies the representative card 30, such as BIN, product code, or the like, may be represented as a part of the card number shown on a front or rear surface of the representative card 30, or may be stored in the MS or IC chip.

In the app card linked representative card payment system 1 according to an embodiment of the present invention, the BIN is preferably used to specify the representative card 30.

The BIN may indicate credit card brand and card company information, that is, the first six digits in the card number. If the representative card 30 is issued by the card issuing server 110, the characteristic data 31 of the representative card 30 may be stored in the card ledger DB 101.

In addition, card numbers indicating at least one or more app cards 103a, 103b, 103c... registered through the app (or web) 11 of the customer terminal 10, and activation or non-activation data 103A, 103B, 103C... for activating or non-activating the at least one or more app cards 103a, 103b, 103c... into a main payment card, may be stored in the app card ledger DB 103.

When the user inputs an activation or non-activation command, such as, a true or false (O/X) mark or a flag mark, to execute the app 11 of the customer terminal 10 to allow the customer to designate or to change the main payment card, the activation or non-activation data 103A, 103B, 103C..., may be stored in the app card ledger DB 103 together with the timeline by the operation processing server 130 of the card company server system 100.

With this configuration, the authorization process is performed using the card number of the representative card 30 in the same manner with the normal card authorization process, and when the card company server system 100 receives an authorization request message, the representative card 30 is confirmed and the authorization process is performed based on the main payment card activated in the app card ledger DB 103.

As shown in FIG. 4B, when the authorization request is transmitted from the affiliated shop terminal 50 through the authorization network, the operation processing server 130 of the card company server system 100 determines based on the characteristic data 31 of the representative card 30, such as BIN separately given to the representative card 30 (the first six digits in the card number), or product code whether the authorization requested card is the representative card 30, and constructs the table for matching the card number of the main payment card actually presented for payment to the card number of the representative card 30 for each authorization process by referring to the app card ledger DB 103. That is to say, the card number of the main payment card matched to the card number of the representative card 30 is stored in the representative card authorization information matching DB 107 together with authorization number, authorized amount, affiliated shop's name, authorization time, authorization date, etc.

When an event associated with authorization (transaction cancellation, purchase request, etc.) is generated later, the representative card authorization information matching DB 107 can be utilized to find the real payment card actually presented for payment, and promotional benefits or services offered to the real payment card can also be used.

With this configuration, the information provided from the authorization network 200 and used by the affiliated shop and the VAN company is the card number of the representative card 30 (that is, the same information is used for authorization and purchase processes), the card company searches for the real payment card from the representative card authorization information matching DB 107 using the card number of the representative card 30 at the time of the corresponding process, and the authorization and purchase processes can be performed based on the real payment card.

The at least one or more app cards 103a, 103b, 103c... providing different services and benefits given by card usage achievement are linked with the representative card 30 to change the main payment card, thereby allowing the customer to conveniently use a variety of goods or services in variable manners according to conditions in real time by carrying only the single representative card 30, instead of by possessing multiple payment cards.

That is to say, if payment is performed based on the representative card 30, the main payment card marked with a flag is processed for payment. For example, if a 5% discount on the bill is offered to the corresponding main payment card, the 5% discount on the bill can be applied to the representative card 30.

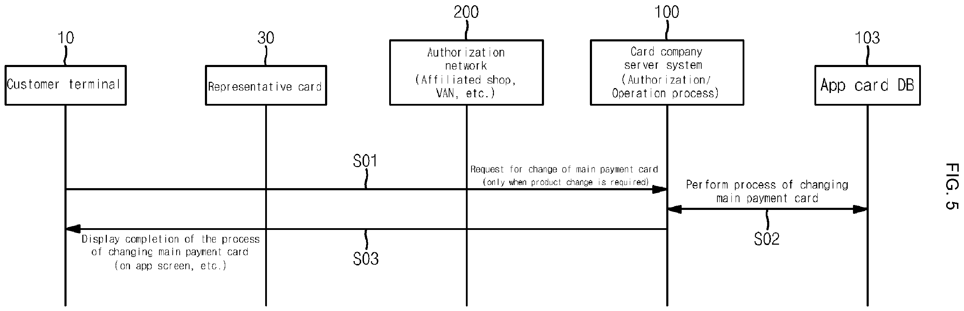

A method of changing a main payment card in an app card linked representative card according to an embodiment of the present invention will now be described with reference to FIGS. 5 to 6B.

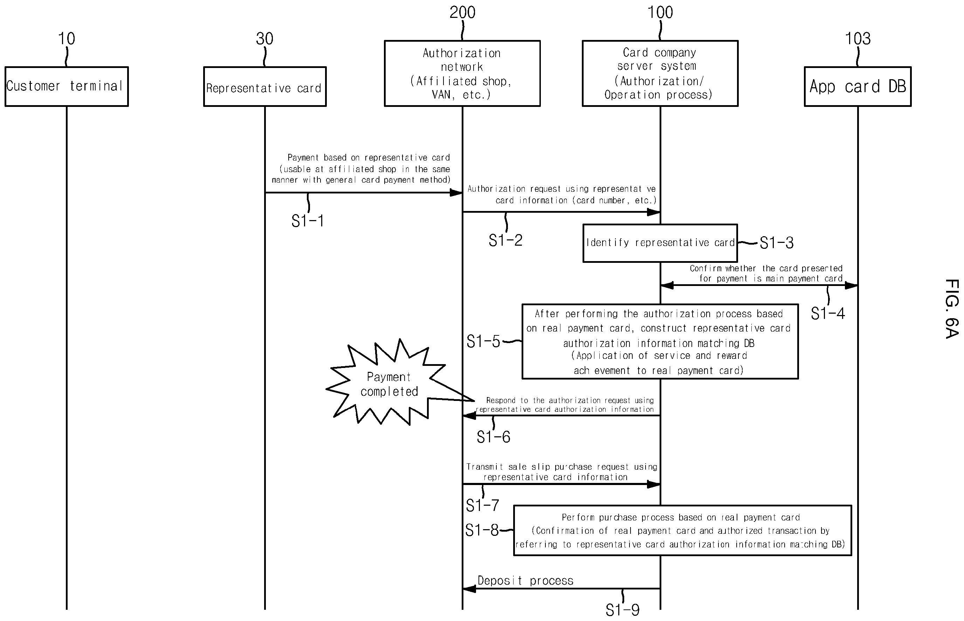

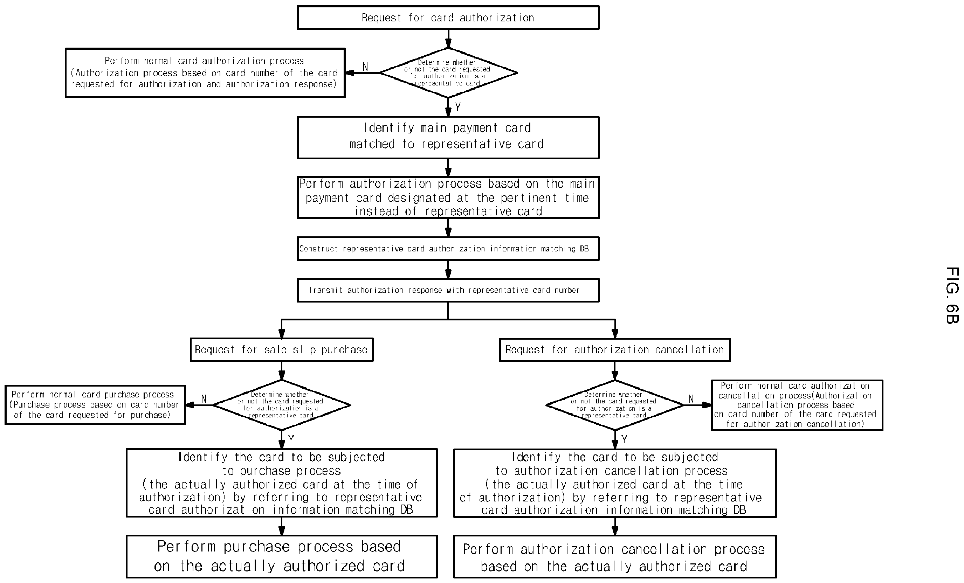

FIG. 5 is a communication diagram showing a method of switching a main payment card to one among app cards linked with the representative card according to an embodiment of the present invention, FIG. 6A is a communication diagram showing an authorization process of the app card linked representative card according to an embodiment of the present invention, and FIG. 6B is a flowchart showing the authorization process of the app card linked representative card according to an embodiment of the present invention.

First, referring to FIG. 5, in a case of changing card-specific services or benefits given by card usage achievement, the process of switching the main payment card to one among app cards linked with the representative card 30 according to an embodiment of the present invention is performed on-site or in advance through the app (or web) 11 between the customer terminal 10 and the card company server system 100.

That is to say, the app (or web) 11 of the customer terminal 10 may be executed and a main payment card change request message may be transmitted to the card company server system 100 by selecting a "Change Main Payment Card" item from the list of menu (S01).

Communication for performing the process of changing the main payment card is made in a section ranging between the operation processing server 130 and the app card ledger DB 103 in the card company server system 100 by turning on/off the activation or non-activation data 103A, 103B, 103C... for activating or non-activating the at least one or more app cards 103a, 103b, 103c... (S02).

Here, the operation processing server 130 of the card company server system 100 may communicate with the customer terminal 10 to display completion of the process of changing the main payment card on a screen of the app (or web) 11 of the customer terminal 10 (S03).

In the app card linked representative card payment method according to an embodiment of the present invention, the customer terminal 10 is used only when the main payment card is changed. Therefore, even when the customer terminal 10 is not available, when the battery of the customer terminal 10 is used up, or when data communication fails, payment may be performed based on the representative card 30.

A method of performing the authorization process of the app card linked representative card according to an embodiment of the present invention will now be described with reference to FIGS. 6A and 6B.

As shown in FIG. 6A, like in the normal card payment method, if payment based on the representative card 30 is requested from the affiliated shop terminal 50 (S1-1), a card authorization request is processed between the authorization network 200, such as the affiliated shop terminal 50, the VAN company, etc. and the card company server system 100 using information about the card number of the representative card 30 (S1-2).

The operation processing server 130 of the card company server system 100 identifies the representative card 30 using the characteristic data 31 of the representative card 30, such as BIN (S1-3), and confirms which one selected among the at least one or more app cards 103a, 103b, 103c... registered corresponding to the card number of the representative card 30 is determined as the main payment card using the app card ledger DB 103 in which the activation or non-activation data 103A, 103B, 103C... are stored (S1-4).

After the authorization process based on the main payment card activated to perform actual payment, the operation processing server 130 of the card company server system 100 constructs the representative card authorization information matching DB 107 (S1-5). Since the authorization process based on the main payment card is performed, service offer and application of card usage achievement may be performed based on the main payment card that is a real payment card.

Meanwhile, the authorization server 150 of the card company server system 100 responds to the authorization request for the affiliated shop terminal 50 through the authorization network 200 with card information about the representative card 30 when the representative card authorization information matching DB 107 is constructed (S1-6).

As described above, if the payment is completed, the affiliated shop terminal 50, the VAN company, etc. may transmit a sale slip purchase request to the card company server system 100 via the authorization network 200 using the card information of the representative card 30 (S1-7).

The operation processing server 130 of the card company server system 100 confirms card number and authorized transaction of the main payment card on which payment is actually performed, that is, the real payment card, by referring to the representative card authorization information matching DB 107 and performs a purchase process based on the real payment card (S1-8), and responds to the sale slip purchase request for the authorization network 200, such as the affiliated shop terminal 50, the VAN company, etc. based on the representative card 30.

FIG. 6A shows that there is a discrepancy between the card number for which an authorization request and a response thereto are performed between the authorization network 200, e.g., the affiliated shop terminal 50, and the card company server system 100, and the card number for which an authorization request and a response thereto are performed in the card company server system 100. Hereinafter, an authorization process of the representative card linked with app cards according to an embodiment of the present invention will be generally described with reference to FIG. 6B.

Referring to FIG. 6B, if there is an authorization request for the representative card, it is determined whether the card requested for authorization is a representative card or not. If no, that is, if the card requested for authorization is a normal card, a normal card authorization process is performed. If yes, that is, if the card requested for authorization is a representative card, the main payment card matched to the representative card is identified and the authorization process based on the main payment card is performed, the representative card authorization information matching DB is constructed, and an authorization response is transmitted with the card number of the representative card 30.

The sale slip purchase request is processed with the representative card number. Here, if it is determined that the card requested for purchase is not the representative card, a normal card purchase process is performed. However, if it is determined that the card requested for purchase is the representative card, the real payment card is identified by referring to the representative card authorization information matching DB 107, and purchase, charging and settlement are performed based on the real payment card.

Meanwhile, if there is an authorization cancellation request, it is determined whether the card requested for authorization cancellation is the representative card. If the card requested for authorization cancellation is a normal card (not the representative card), an authorization cancellation process for a normal card is performed. If the card requested for authorization cancellation is the representative card, the real payment card to be subjected to the authorization cancellation process is identified by referring to the representative card authorization information matching DB 107 and the authorization cancellation process is performed based on the real payment card.

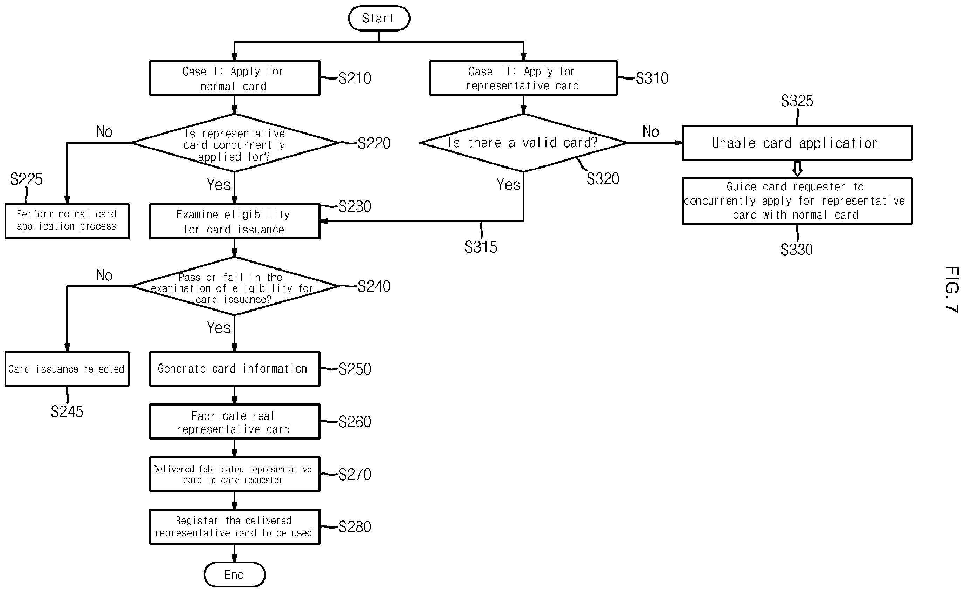

A method of issuing an app card linked representative card according to an embodiment of the present invention will now be described with reference to FIG. 7.

FIG. 7 is a flowchart showing a method of issuing an app card linked representative card according to an embodiment of the present invention.

First, if a normal card is applied for (S210), it is inquired whether to concurrently apply for a representative card with the normal card (S220). If not, a normal card application process is performed (S225).

Meanwhile, if the normal card and the representative card are concurrently applied for, eligibility for card issuance is examined (S230) and it is determined whether the examination result is a pass or a fail (S240). If the eligibility for card issuance is not fulfilled and the examination result is a fail, card issuance may be rejected (S245). If the eligibility for card issuance is fulfilled and the examination result is a pass, card information is generated (S250).

Next, the representative card is fabricated (S260) and then delivered to a card requester (S270), and the delivered representative card is registered to be used (S280).

However, if the representative card is solely applied for, it is checked whether there is a valid card to be registered as an app card (S320). If there is no valid card to be registered as an app card, it is unable to apply for the representative card (S325). Therefore, the card requester is guided to concurrently apply for the representative card with the normal card (S330). If there is a valid card (S315), eligibility for card issuance is examined (S230) and it is determined whether the examination result is a pass or a fail (S240). Thereafter, the same process with the normal card issuing process is performed.

Registration of App cards and designation of a main payment card designation are performed separately from the process of issuing the representative card. When credit cards owned by the customer are registered as app cards through the app (or web) 11, an app card ledger DB 103 is generated and main payment card designating information may be stored in the app card ledger DB 103. The main payment card designating information may be changed in real time through the app (or web) 11.

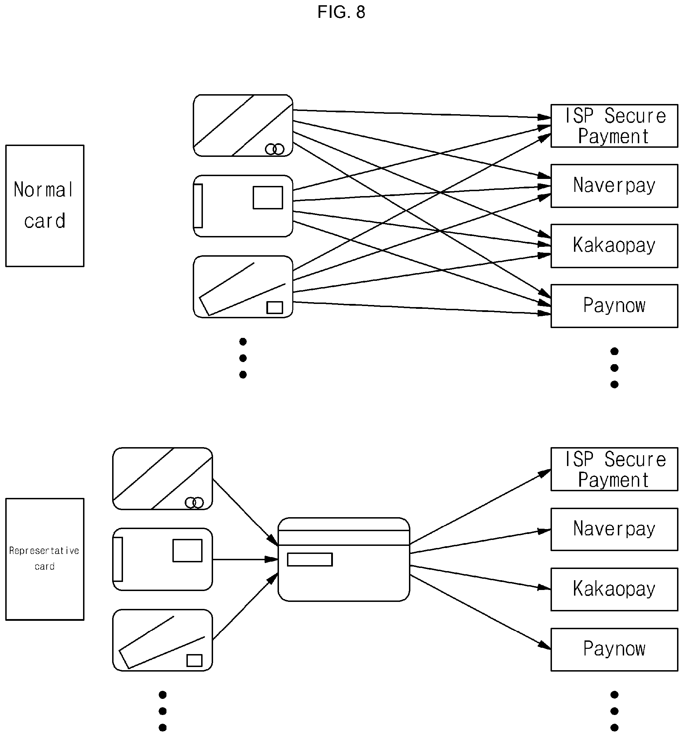

When the representative card 30 issued by the card issuing server 110 is used offline, the above-described noticeable effects can be expected. As shown in FIG. 8, noticeable effects can also be expected when the representative card 30 is used online.

FIG. 8 is a conceptual diagram showing effects expected by using an app card linked representative card according to an embodiment of the present invention registered with various payment platforms.

As shown in FIG. 8, during an online payment registration procedure, in order to utilize a normal card payment service, such as Kakaopay, Naverpay, etc., it is necessary to enter card information of a card to be used for payment to register the card with the respective payment platforms and to select a card to be used for payment whenever payment is to be performed, which is quite inconvenient.

However, when an app card linked real card according to an embodiment of the present invention is used, one single representative card has only to be registered with each payment platform. Even when the payment cards owned by the customer are added, it is not necessary to register the respective payment cards one by one in various payment platforms and the online payment registration procedure of the added payment cards can be implemented just by changing the main payment card through the app or web of the customer terminal 10.

As described above, in the app card linked representative card payment system and method according to an embodiment of the present invention, a customer can conveniently use a variety of goods or services in variable manners according to conditions in real time by carrying only a single representative card, instead of by possessing multiple payment cards. In addition, the customer can register only the single representative card to be used for online payment without a need for registering multiple payment cards one by one with various payment platforms whenever payment is to be performed. Further, secured card payment can be implemented based on the representative card irrespective of power supply of mobile phone.

In addition, the app card linked representative card payment system and method according to an embodiment of the present invention can be conveniently used from the viewpoints of affiliated shops and VAN companies since the existing card payment system is used as it is. That is to say, it is not necessary to train employees for new service system and to make the employees feel uncomfortable in using the new service system. In addition, unlike existing mobile card (USIM, App card) payment systems in which a separate payment terminal should be installed and developed and which can be used only at particular affiliated shops, the app card linked representative card payment system and method according to an embodiment of the present invention can be used at any affiliated shop of normal card payment system.

In addition, in the app card linked representative card payment system and method according to an embodiment of the present invention, since the card company provides a variety of goods or services using a single real payment card, it is possible to minimize issuing events of real payment cards, thereby saving costs associated with issuing new cards, including raw materials, packing and delivery of blank cards, and achieving issuing process efficiency.

While the present invention have been particularly shown and described with reference to exemplary embodiments thereof, it will be understood by those of ordinary skill in the art that various changes in form and details may be made therein without departing from the spirit and scope of the present invention as defined by the following claims.

## Claims

1. A payment system of a representative card linked with app cards, the payment system comprising:
a customer terminal which is connected to a card company server system through an app or web and is capable of replacing a main payment card with one selected among at least one or more app cards registered in the app or web in real time;
a standard representative card which can be used online or offline as the representative of the app cards;
an authorization network in which an authorization or purchase request is made based on the representative card; and
a card company server system which performs an authorization or purchase process based on the main payment card of the registered app cards linked with the representative card.

2. The payment system of claim 1, wherein at least one of credit cards owned by the customer are registered as the app cards of the customer terminal, one of the app cards registered for authorization and purchase processes when payment is to be performed based on the representative card can be selected to change the main payment card, and the card company server system includes an app card ledger DB for managing information about the registered app cards and the main payment card, and a representative card authorization information matching DB in which information about the representative card, the main payment card corresponding to the representative card at the time of authorization and authorization or purchase records, are stored.

3. The payment system of claim 2, wherein the card company server system comprises a card issuing server issuing the credit cards owned by the customer, and an operation processing server constructing the representative card authorization information matching DB using the information about the app cards and the main payment card, which are stored in the app card ledger DB.

4. The payment system of claim 3, wherein the card company server system includes an authorization server responding to the authorization request for the authorization network based on the representative card and performing an authorization or purchase process based on the main payment card linked with the representative card in the card company server system.

5. The payment system of one of claims 1 to 4, wherein card information of the representative card includes characteristic data of the representative card, for indicating that the representative card is a real payment card linked with the app cards.

6. The payment system of claim 5, wherein at least one of BIN, product code, and information about other cards is used as the characteristic data of the representative card.

7. A payment method of a representative card linked with app cards, the payment method comprising:
a card company server system determining whether the card requested for authorization is the representative card using characteristic data of the representative card;
the card company server system identifying the main payment card to be subjected to a payment process from the app card ledger DB corresponding to the card number of the representative card; and
the card company server system constructing a representative card authorization information matching DB using the representative card, the main payment card linked with the representative card and an authorization number.

8. The payment method of claim 7, comprising:
requesting for authorization to the card company server system through an online or offline authorization network using card information of the representative card; and
the card company server system responding to the authorization request through the authorization network using the card information of the representative card.

9. The payment method of claim 7, comprising:
executing an app or web of a customer terminal;
requesting for changing the main payment card through the app or web of the customer terminal;
changing main payment card information of the app card ledger DB; and
displaying the main payment card changed through the app or web of the customer terminal.

10. The payment method of claim 7, comprising:
the card company server system performing an authorization process using a card number of the main payment card linked with the representative card;
confirming the main payment card subjected to the purchase process and authorization transaction by referring to the representative card authorization information matching DB using the representative card information and the authorization number; and
performing the purchase process based on the main payment card.

11. The payment method of claim 7, wherein the determining whether the card requested for authorization is the representative card comprises identifying the characteristic data of the representative card.

12. The payment method of claim 7, comprising registering the representative card to be used for payment with a payment platform providing a payment service using the representative card information.
